# EUROPÄISCHE PATENTANMELDUNG

(11) **EP 4 512 230 A1**
(43) Veröffentlichungstag der Anmeldung: **26.02.2025**
(21) Anmeldenummer: 24195058.3
(22) Anmeldetag: 16.08.2024
(51) Int. Cl.: A01G 9/24

(54) **STEUEREINHEIT**

(30) Priorität: 25.08.2023 CH 9052023
(71) Anmelder: MABEWO Greentocube AG, 6403 Küssnacht am Rigi (CH)
(72) Erfinder: Börner, Felix, 09599 Freiberg (DE); Ratajska, Marlena, 09599 Freiberg (DE)

(57) **Zusammenfassung**

Die Erfindung betrifft eine Steuereinheit, besondere geeignet zur Steuerung des Betriebs einer Pflanzeinheit, insbesondere geeignet für einen gewerblichen Einsatz. Die Steuereinheit soll, in Verbindung mit der baulichen Gestaltung einen automatisierten und zutrittsfreien Betrieb ermöglichen. Hierzu umfasst die Steuereinheit zumindest ein Modul mit Steuerungssoftware für Steuerungsvorgänge betrieblicher Abläufe und ein weiteres, dem ersten Modul übergeordnetes, Modul mit Betriebssoftware zur Erfassung und Verarbeitung von Daten, sowie Rezepten für den Betrieb der Pflanzeinheit.

## Beschreibung

Die Erfindung betrifft eine Steuereinheit, bevorzugt geeignet zur Steuerung des Betriebs einer Pflanzeinheit, insbesondere geeignet für einen gewerblichen Einsatz.

Klimawandel und Zunahme der Weltbevölkerung stellen die Energie-,Trink- und Brauchwasserversorgung insbesondere in armen Ländern und Regionen mit schwacher Infrastruktur vor immer grössere Herausforderungen, die mit konventionellen Technologien aufgrund des Investitionsbedarfs und der Umweltfolgen kaum zu bewältigen sind.

Anlagen zur Klimatisierung und Flüssigkeitsaufbereitung für einen dezentralen Einsatz sind bekannt. So offenbart die DE 102017122533 A1 eine derartige Anlage, die autark und kompakt ist. Sie umfasst mindestens eine Verdampferkammer für Rohwasser bzw. Abwasser, Kondensationskammern für das bei der Verdampfung entstehende Gas, einen Kältespeicher und eine Energiewandlungseinheit. Das Gas wird vor der Kondensationskammer durch einen Wärmetauscher geführt. In der Verdampferkammer gebildetes Eis wird für Kühlungszwecke gespeichert. Erreicht werden soll eine Trinkwassererzeugung für ein Gebäude und eine Klimatisierung des Gebäudes mit geringer Energiezufuhr von aussen. Der Geräte- und Installationsaufwand ist vergleichsweise hoch.

In der DE 102016014435 A1 ist ein Aufsatzmodul für einen stellbaren Trinkwassertank offenbart, wobei der Trinkwassertank mit einer Wasseraufbereitungsanlage gekoppelt ist. Zu dessen Energieversorgung sind Solarpaneele vorgesehen, die den Trinkwassertank umhüllen und auch auf dem Aufsatzmodul vorgesehen sind. Zugleich ist das Aufsatzmodul als Regenwasserauffangschirm ausgebildet, von dem aufgefangenes Regenwasser in den Trinkwassertank geleitet wird.

In der DE 102004015728 A1 ist eine Vorrichtung zur autarken Wassergewinnung aus der Luftfeuchtigkeit gezeigt, die einfach aufgebaut ist. Ohne elektrische Hilfsmittel soll es möglich sein, ca. 1I Wasser je Quadratmeter Anlagenfläche (Folien) aus der Luft abzuscheiden. Hierzu wird Umgebungsluft am Tag durch Erwärmung der Vorrichtung angesaugt und ein an einem, nachts ausgekühlten Kondensator unterhalb des Taupunkts gekühlt. Der gekühlte Luftstrom wird je nach Temperatur gedrosselt und nach Ablauf des Kondensationsprozesses mittels Gegenstrom mit der zugeführten Luft erwärmt.

Eine weitere derartige Vorrichtung ist in der DE 102017109658 A1 offenbart. Hierbei umfasst ein Kondensator zur Luftentfeuchtung wenigstens einen elektrisch angetriebenen Rotor in einem, an den Stirnflächen offenen, rohrförmigen Gehäuse, dessen Rotorblätter aus offenporigem Metallschaum bestehen. Zur aktiven Kühlung enthält der Kondensator mehrere Kühlelemente, zum Beispiel Peltierelemente, die mit den Rotorblättern verbunden sind. Im Betrieb werden die drehenden Rotorblätter auf eine Temperatur von 3-5 Grad unterhalb der Umgebungstemperatur gekühlt. Die in der strömenden Luft enthaltene Feuchtigkeit kondensiert an den gekühlten Rotorblättern, wobei der offenporige Metallschaum eine relativ grosse Kontaktfläche ermöglicht. Das kondensierte Wasser wird an die innere Gehäusewand geschleudert und läuft in einen Wasserauffangbehälter.

Die vorbeschriebenen Lösungen sind nur für Einzelanwendungen bzw. einzelne Haushalte geeignet.

Darüber hinaus ist in der WO 2021028731 A1 eine Anlage zur Gewinnung von Energie, Nahrungs- und Futtermitteln und/oder Wasser bei gewerblichem Einsatz offenbart, die mindestens ein Modul, welches zwei Strukturelemente in Form von Halbmodulen und ein, die Strukturelemente verbindendes Element umfasst. Hierbei weist ein Strukturelement einen Boden, ein Wandsegment und ein Deckensegment mit einem Bogendach auf, wobei Wandsegment und Deckensegment unabhängig voneinander handhabbar sind, wobei unter dem Bogendach Standardcontainer angeordnet sind. Das Bogendach ist zur Anordnung von Photovoltaikmodulen und/oder mindestens einer Vorrichtung zur Entfeuchtung von Umgebungsluft geeignet.

Die Aufgabe der Erfindung besteht deshalb darin, eine Steuereinheit, bevorzugt zur Steuerung des Betriebs einer Pflanzeinheit und für den insbesondere gewerblichen Einsatz zu entwickeln, die einen automatisierten und zutrittsfreien Betrieb ermöglicht.

Die Aufgabe ist mit den kennzeichnenden Merkmalen des Patentanspruchs 1 gelöst.

Eine erfindungsgemässe Steuereinheit umfasst zumindest ein Modul mit Steuerungssoftware für Steuerungsvorgänge betrieblicher Abläufe, zum Beispiel im Zusammenhang mit Pflanzen und ein weiteres, dem ersten Modul übergeordnetes, Modul mit Betriebssoftware zur Erfassung und Verarbeitung von Daten dazu, insbesondere zur Steuerung von Wachstums- und Gesundheitsdaten der Pflanzen sowie Wachstumsrezepte umfasst.

Bevorzugt ist der Betrieb der Pflanzeinheit automatisiert und von aussen steuerbar.

Bevorzugte Ausgestaltungen der erfindungsgemässen Steuereinheit sind in den abhängigen Ansprüchen offenbart.

Die Steuereinheit ist bevorzugt zur Steuerung einer, insbesondere automatisierten Pflanzeinheit geeignet.

Das Modul mit Steuerungssoftware ist vorteilhaft für Steuerungsvorgänge im Zusammenhang mit Pflanzbehältern und das Modul mit Betriebssoftware zur Steuerung von Umgebungsbedingungen in der Pflanzeinheit, insbesondere zur Steuerung von Wachstums- und Gesundheitsdaten der Pflanzen sowie der Generierung von Wachstumsrezepten geeignet.

Das Modul mit Betriebssoftware analysiert dabei Systemstatusdaten der Pflanzeinheit und Wachstums- und Gesundheitsdaten der Pflanzen und erstellt Rezepte und optimiert vorhandene Rezepte des Pflanzenwachstums.

Besonders vorteilhaft umfasst die Steuereinheit weiterhin ein User Interface zu einem Smartphone und/oder einer Web-App (PC, Cloud).

Eine Pflanzeinheit umfasst dabei zum Beispiel zumindest eine Wachstumseinheit zur Aufzucht von Pflanzen bzw. Pflanzgut und mindestens eine, mit der Wachstumseinheit verbindbare, Handlingeinheit zur Aufnahme der Infrastruktur zum Betrieb der Pflanzeinheit. Besonders bevorzugt umfasst eine Pflanzeinheit jeweils zwei übereinander angeordnete Wachstums- und Handlingeinheiten, die einander zugeordnet sind.

Die Handlingeinheit ist der mindestens einen Wachstumseinheit vorangestellt und ist bevorzugt aus zwei Standardcontainern für das Handling und die Pflege des Pflanzguts und für die zum Unterhalt der Pflanzeinheit erforderliche Technik gebildet.

In der Handlingeinheit sind die zur Vorbereitung, Anzucht, Ernte und Verarbeitung der aufzuziehenden Pflanzen notwendigen Teilsysteme enthalten und von daher ist die Handlingeinheit der Wachstumseinheit vorangestellt. Über den vorbeschriebenen Ausschnitt werden Trägerschlitten mit Pflanzschalen der Wachstumseinheit zugeführt oder aus dieser entnommen.

Alle Teilsysteme der Pflanzeinheit erhalten ihre unmittelbaren Steuerbefehle von der Steuerungssoftware. Sowohl einfache Vorgänge, zum Beispiel Entleerung und Reinigung von Pflanzbehältern, sowie Basiseinstellungen, zum Beispiel Temperatur, Luftfeuchte oder Licht, werden mittels Steuerungssoftware gesteuert oder können vom Nutzer der Pflanzeinheit vorgegeben werden.

Zur Erfassung und Verarbeitung von Sensordaten (zum Beispiel zum Wachstumsstatus einer Pflanze) dient die Betriebssoftware, die insofern der Steuerungssoftware übergeordnet ist. Die Betriebssoftware verfügt auch über ein User Interface (Schnittstelle) zu einer Smartphone-/Web-App zur Konfiguration und Kalibrierung des Systems, zur Prozessüberwachung, zur zentralen Verwaltung einer oder mehrerer Pflanzeinheiten, zum Erwerb oder Einrichtung neuer Rezepte und zur Installation von Systemupdates.

Durch Auswertung von Sensordaten kann die Betriebssoftware das Pflanzenwachstum hinsichtlich Ertrag, Qualität und Effizienz optimieren (ein optimales Prozedere für jede anzubauende Pflanze, Rezept genannt). Die Betriebssoftware übermittelt alle erfassten Daten zu Gesundheit und Wachstum von Pflanzen an eine externe, zentrale Datenbank/Server zur Auswertung und Optimierung von Rezepten (Datendatei). Vom Server können Rezepte später wieder abgerufen werden, auch für andere, an einem beliebigen Ort befindliche, Pflanzeinheiten Ein Rezept beinhaltet in zeitlicher Abfolge alle Steuerbefehle und Umgebungsparameter von der Aussaat bis zur Ernte und bildet das erworbene Know-How einer spezifischen Pflanzensorte dazu ab, das zu einem beliebigen späteren Zeitpunkt erneut verwendet werden kann.

Infolge der höheren Effizienz können Produkte zu geringeren Kosten erzeugt werden.

Über eine weitere Schnittstelle zur Steuerungssoftware kann die Betriebssoftware wesentliche Wachstumsparameter in zeitlicher Abfolge beeinflussen und die zum Betrieb der Pflanzeinheit erforderlichen Vorgänge steuern.

Eine physische Trennung beider Module und Software ist nicht zwingend.

Ein Vorteil der Rezepte besteht darin, dass der Betreiber einer Pflanzeinheit nicht über notwendiges Hintergrundwissen zum Anbau von Pflanzen verfügen muss.

Ein weiterer Vorteil besteht in der möglichen Simulation verschiedener Umgebungsbedingungen, wodurch auch die Stimulation eines atypischen Wachstums möglich ist.

Die Erfindung wird nachfolgend in einem Ausführungsbeispiel anhand einer Zeichnung näher beschrieben. In der Zeichnung zeigen die
- Fig. 1:: eine Pflanzeinheit,
- Fig. 2:: die Pflanzeinheit nach Fig. 1 in anderer Darstellung;
- Fig. 3:: die Pflanzeinheit nach Fig. 1 in einer weiteren Darstellung;
- Fig. 4:: eine erfindungsgemässe Steuereinheit der Pflanzeinheit.

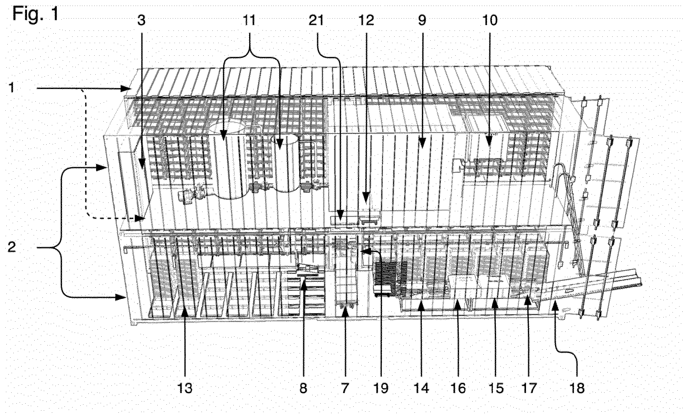

Eine erfindungsgemässe Pflanzeinheit ist in der Fig. 1 in einer Ausführungsform dargestellt. Sie weist im Beispiel zwei übereinander angeordnete Wachstumseinheiten 1 für Pflanzen und zwei zugeordnete und ebenfalls übereinander angeordnete Handlingeinheiten 2 auf.

Die Wachstumseinheiten 1 und die Handlingeinheiten 2 sind aus Standard-Seefrachtcontainern gebildet.

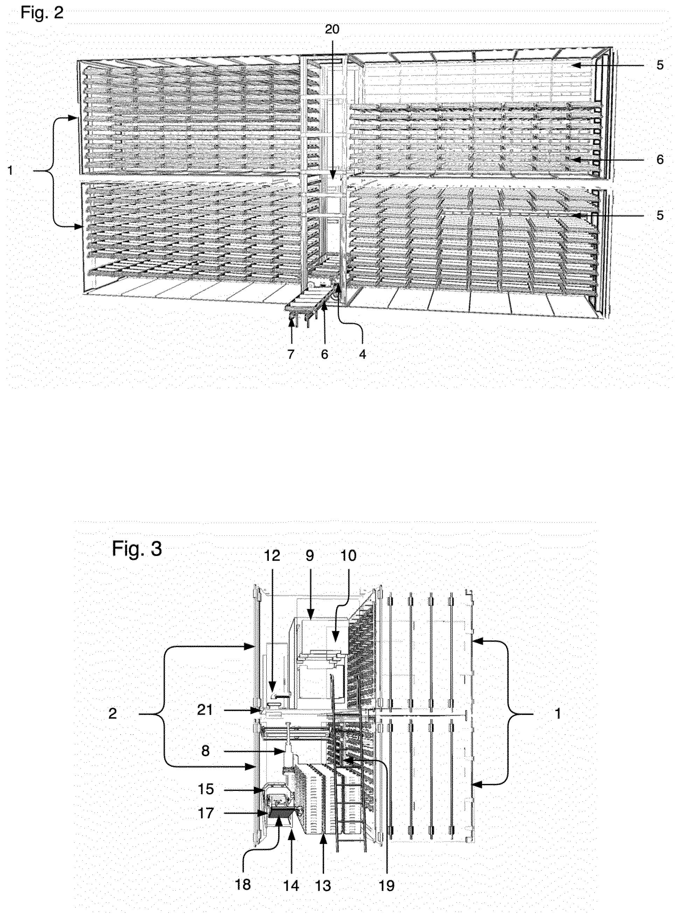

Jede Wachstumseinheit 1 ist mit, in einem Raster angeordneten Laufschienen 5 versehen, wobei die Laufschienen 5 auch eine Beleuchtung für die Pflanzen aufweisen. Auf den Laufschienen 5 sind wiederum Trägerschlitten 6 mit, im Beispiel, jeweils mehreren Pflanzbehältern angeordnet (Fig. 2).

Beide Wachstumseinheiten 1 sind durch eine Öffnung, einen Ausschnitt 19 (Fig. ) in jeder Wachstumseinheit 1 miteinander verbunden.

Der Ausschnitt 19 erstreckt sich weiterhin kaminartig über beide Wachstumseinheiten 1 und nimmt einen darin geführten Pflanzenlift 4 mit einem Bewässerungssystem, die Trägerschlitten 6 und ein Förderband 7 auf. Die Trägerschlitten 6 sind geeignet, auf den Laufschienen 5 Pflanzbehälter zu transportieren.

Die untere Handlingeinheit 2 enthält gestapelte Pflanzbehälter 13, die zur Verwendung in den Wachstumseinheiten 1 bereitstehen. Sie enthält weiterhin eine Erntestrecke 14 mit einem Förderband zum Transport von Pflanzbehältern, eine Einrichtung zur Reinigung 15 und zur Desinfektion 16 von Pflanzbehältern, einen Auswurfmechanismus 17 für Pflanzbehälter, einen teleskopierbaren Kranarm 8 mit einem Greifer und ein Förderband 18 zum Austrag von Erntegut und abgeernteten Pflanzen aus der Handlingeinheit 2.

Die obere Handlingeinheit 2 enthält eine Technikeinheit 3 zur Stromversorgung und HVAC, einen Wassertank 11 für eine Keimstation 9, eine Einrichtung zur Saatgutabgabe 12 an die Keimstation 9 und Grossbehälter 10 der Keimstation 9.

Beide Handlingeinheiten 2 sind durch eine Öffnung, einen Ausschnitt 20 (Fig. 2) in jeder Handlingeinheit 2 miteinander verbunden.

Die Wachstums- und Handlingeinheiten 1, 2 sind zudem durch eine Öffnung, einen Ausschnitt 21 (Fig. 1, 3) miteinander verbunden. Das Förderband 7 erstreckt sich vom Ausschnitt 19 in den Ausschnitt 21.

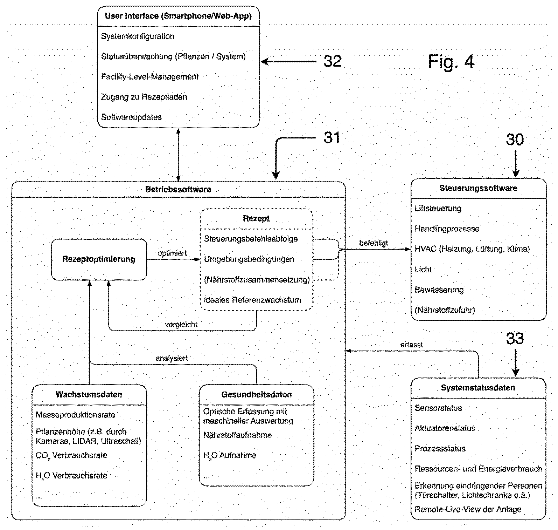

Die Technikeinheit 3 weist zudem eine Steuereinheit (Fig.4) auf, die Steuerungssoftware 30 für Steuerungsvorgänge der betrieblicher Abläufe der Pflanzeinheit und übergeordnete Betriebssoftware 31 zur Erfassung und Verarbeitung von Daten, insbesondere zur Steuerung von Wachstums- und Gesundheitsdaten der Pflanzen sowie Wachstumsrezepte und deren Optimierung aufweist. Die Betriebssoftware 31 erfasst zudem Systemstatusdaten 33 der Pflanzeinheit, analysiert Wachstums- und Gesundheitsdaten der Pflanzen und optimiert vorhandene Rezepte des Pflanzenwachstums.

Weiterhin verfügt die Steuereinheit über ein User Interfache 32 (App für Smartphone, PC/Cloud), um die Pflanzeinheit von aussen bedienen und überwachen zu können.

Im Betrieb der Pflanzeinheit wird zunächst Saatgut, zum Beispiel Gerstenkörner, in der Keimstation 9 der oberen Handlingeinheit 2 in vorbereiteten Pflanzbehältern zum Keimen gebracht und anschliessend mittels des Pflanzenlifts 4 auf den Trägerschlitten 6 auf den Laufschienen 5 in die Wachstumseinheiten 1 zur weiteren Aufzucht überführt.

Bei Erreichen der Erntereife werden die reifen Gerstenpflanzen zur Erntestrecke 14 der unteren Handlingeinheit 2 überführt und die reifen Gerstenkörner werden von den Pflanzen getrennt. Die Pflanzbehälter werden entleert, geeinigt, desinfiziert und bis zu einer erneuten Nutzung im Lager 13 gelagert. Gerstenkörner und Pflanzenreste sowie die gebrauchtes Substrat werden mittels Kranarm 8 und Auswurfmechanismus 17 über das Förderband 18 ausgetragen.

Über das Förderband 18 werden bei Bedarf neues Substrat und neues Saatgut eingetragen.

Die erfindungsgemässe Pflanzeinheit ermöglicht eine sehr hohe Anbaudichte von Pflanzen und erfordert bei normalem Betrieb keinen Zutritt von Bedienpersonal, so dass zudem nur eine geringe Wahrscheinlichkeit für eine Kontamination mit Schädlingen und Krankheitserregern besteht.

Aufgrund der hohen Anbaudichte können Ressourcen und Infrastruktur besonders effizient genutzt werden, Prozesse können in geschlossenen Kreisläufen betrieben werden, eine Kontrolle und Einflussnahme auf interne Umgebungsbedingungen ist einfach.

### Aufstellung der verwendeten Bezugszeichen

- 1: Wachstumseinheit
- 2: Handlingeinheit
- 3: Technikeinheit
- 4: Pflanzenlift
- 5: Laufschienen
- 6: Trägerschlitten
- 7: Förderband
- 8: Kranarm
- 9: Keimstation
- 10: Grossbehälter
- 11: Wassertank
- 12: Saatgutabgabe
- 13: Lager für Pflanzbehälter
- 14: Erntestrecke
- 15: Reinigung
- 16: Desinfektion
- 17: Auswurfmechanismus
- 18: Förderband
- 19: Ausschnitt
- 20: Ausschnitt
- 21: Ausschnitt
- 30: Steuerungssoftware
- 31: Betriebssoftware
- 32: User Interface
- 33: Systemstatusdaten

## Patentansprüche

1. Steuereinheit, die zumindest ein Modul mit Steuerungssoftware (30) für Steuerungsvorgänge betrieblicher Abläufe und ein weiteres, dem ersten Modul übergeordnetes, Modul mit Betriebssoftware (31) zur Erfassung und Verarbeitung von Daten, sowie Rezepte für den Betrieb einer Anlage umfasst.

2. Steuereinheit nach Anspruch 1, **dadurch gekennzeichnet, dass** sie bevorzugt zur Steuerung einer Pflanzeinheit geeignet ist.

3. Steuereinheit nach Anspruch 1 oder 2, **dadurch gekennzeichnet, dass** das Modul mit Steuerungssoftware (30) für Steuerungsvorgänge im Zusammenhang mit Pflanzbehältern und das Modul mit Betriebssoftware (31) zur Steuerung von Umgebungsbedingungen in der Pflanzeinheit, insbesondere zur Steuerung von Wachstums- und Gesundheitsdaten der Pflanzen sowie der Generierung von Wachstumsrezepten geeignet ist.

4. Steuereinheit nach einem der Ansprüche 1 bis 3, **dadurch gekennzeichnet, dass** das Modul mit Betriebssoftware (31) Systemstatusdaten (33) der Pflanzeinheit und Wachstums- und Gesundheitsdaten der Pflanzen analysiert und vorhandene Rezepte des Pflanzenwachstums optimiert.

5. Steuereinheit nach einem der Ansprüche 1 bis 4, **dadurch gekennzeichnet, dass** sie weiterhin ein User Interface (32) umfasst.

6. Verfahren zur Steuerung einer Pflanzeinheit mittels einer Steuereinheit nach einem der Ansprüche 1 bis 5, **dadurch gekennzeichnet, dass** Wachstumsparameter von Pflanzen von der Betriebssoftware der Steuereinheit erfasst, verarbeitet und als Rezept gespeichert werden.

7. Verfahren nach Anspruch 6, **dadurch gekennzeichnet, dass** Rezepte an eine zentrale Datenbank übermittelt und ausgewertet und/oder infolge der Auswertung angepasst werden.

8. Verfahren nach Anspruch 7, **dadurch gekennzeichnet, dass** Rezepte von der Datenbank an die Steuereinheit einer Pflanzeinheit übermittelt werden.
